# EUROPEAN PATENT APPLICATION

(11) **EP 4 679 677 A1**
(43) Date of publication of application: **14.01.2026**
(21) Application number: 24188037.6
(22) Date of filing: 11.07.2024
(51) Int. Cl.: H02K 1/276, H02K 1/32, H02K 9/06

(54) **ROTOR**

(71) Applicant: MAHLE International GmbH, 70376 Stuttgart (DE)
(72) Inventor: KOTAR, Rok, 1293 Smarje-Sap (SI); RUGELJ, Andraz, 8232 Sentrupert (SI)
(74) Representative: BRP Renaud & Partner mbB Rechtsanwälte Patentanwälte Steuerberater

(57) **Abstract**

The invention relates to a rotor (1) for an electric machine, especially a spoke-type internal-permanent-magnet motor. The rotor (1) comprises a shaft (2) and an annular rotor body (3). The shaft (2) is arranged in the rotor body (3) at a distance, so that an annular cavity (8) is formed between the shaft (2) and the rotor body (3).

## Description

The invention relates to a rotor for an electric machine, especially for a spoke-type internal-permanent-magnet motor, with a shaft and a rotor body according to the general term of claim 1.

A rotor for a spoke-type IPM-motor (IPM: Internal Permanent Magnet) usually contains a rotor pack and magnets arranged in the rotor pack. The rotor pack is attached to a non-magnetic core and the core is attached to a shaft of the rotor. Thereby, the core carries the rotor pack with magnets and the torque is transmitted from the shaft via the core to the magnets and the rotor pack. The non-magnetic core means additional effort during production and assembling of the rotor and increases the weight of the rotor.

The object of the invention is therefore to specify an improved or at least alternative embodiment for a rotor of the type, in which the disadvantages described are overcome.

According to the invention, this object is solved by the object of independent claim 1. Advantageous embodiments are the subject of the sub-claims.

The rotor according to the invention is provided for an electric machine, especially for a spoke-type IPM-motor. The rotor comprises a shaft with a longitudinal central axis and an annular i.e. ring-shaped rotor body. The shaft is arranged coaxially in respect to the longitudinal central axis in the rotor body. The rotor body comprises several - but at least two - rotor stack segments and several - but at least two -magnets, wherein the rotor stack segments and the magnets are arranged around the shaft and alternate in a circumferential direction. The rotor body is arranged at a radial distance to the shaft, so that an annular i.e. ring-shaped cavity is formed between the shaft and the rotor body. The cavity encircles i.e. revolving i.e. surrounds the shaft in the circumferential direction.

In the rotor according to the invention, the rotor body is arranged at a distance to the shaft. Thereby, on the one hand, the shaft and the rotor body can be cooled by air in the cavity and, on the other hand, the weight of the rotor is reduced. Especially, non-magnetic core is not used anymore and thus, the number of components in the rotor and the cost of the rotor can be reduced.

The cavity formed between the shaft and the rotor body can extend over the entire axial length of the rotor body. This allows the shaft and the rotor body to be cooled within the cavity over their entire axial length.

The respective magnet can be formed as a separate one-piece or multi-piece element. The number of elements depends on the properties i.e. physical limits of the magnet. The magnet can be made of a ferritic or neodymium material. The respective rotor stack segment can be formed as a separate element consisting of several metal sheets that are material-bonded to each other. The rotor stack segment can be made of an electrically conductive material.

In one possible embodiment, the rotor stack segments and the magnets can each be formed as separate elements. The rotor stack segments and the magnets can be connected i.e. fastened i.e. fixed to each other in a material-bonded manner. For example, the rotor stack segments and the magnets can be glued. This allows the rotor body to be stabilized.

In the rotor body, the number of the magnets and the number of the rotor stack segments can be identical. Thus, in circumferential direction, each rotor stack segment can be arranged between two magnets and each magnet can be arranged between two rotor stack segments. This can improve the magnetic properties of the rotor body.

Each of the rotor stack segments can comprise a radially outer first projection. The first projection can be formed on a side face aligned transversely to the circumferential direction and facing the adjacent magnet. The first projection can project in the circumferential direction, so that the adjacent magnet can rest i.e. lie i.e. stop on the first projection in a radially outward direction. This allows the magnets to be attached to the rotor stack segments in the radially outward direction, thereby stabilizing the rotor body. The first projection can be formed on the radially outer edge of the named side face of the rotor stack segment. Especially, the first projection can extend axially over the entire axial length of the named side face i.e. of the rotor stack segment.

Each of the rotor stack segments can comprise a radially inner second projection. The second projection can be formed on a side face aligned transversely to the circumferential direction and facing the adjacent magnet. The second projection can project in the circumferential direction, so that the adjacent magnet can rest i.e. lie i.e. stop on the second projection in a radially inward direction. This allows the magnet to be attached to the rotor stack segment in the radially inward direction, thereby stabilizing the rotor body. The second projection can be formed on the radially inner edge of the named side face of the rotor stack segment. Especially, the second projection can extend axially over the entire axial length of the named side face i.e. of the rotor stack segment.

The respective rotor stack segment can comprise the first projection and the second projection, so that the adjacent magnet can be arranged between the projections and thus be fixed radially inwardly and radially outwardly.

To attach i.e. fasten the rotor body to the shaft, the rotor can comprise two annular i.e. ring-shaped support rings. The support rings can be aligned coaxially and can be fastened i.e. attached i.e. fixed to the shaft. The rotor body can then be arranged axially between the support rings and can be fastened i.e. attached i.e. fixed to the support rings. The support rings can thus support the rotor body and the torque can be transmitted from the rotor body to the shaft via the support rings.

The support rings can be fastened i.e. attached i.e. fixed to the shaft, for example, via press fit. The support rings can be made or are made of a non-magnetic material. The respective support ring can comprise at least one recess that corresponds axially with the cavity in an air-conducting manner. As a result, the cavity can be connected to the outside in an air-conducting manner and the shaft and the rotor body can be actively air-cooled within the cavity.

The rotor body can be fastened i.e. attached i.e. fixed to the support rings via several - but at least two - screws or several - but at least two - rivets. In particular, the screws or the rivets can penetrate the rotor stack segments and fasten the two support rings to each other and the rotor body to the support rings. Especially, the screws or the rivets can act as tie rods that axially pull the two support rings and the rotor body arranged in-between together. Corresponding openings can be provided in the support rings and in the rotor stack segments for this purpose.

In one possible embodiment, two screws or two rivets can be assigned to each rotor stack segment. The two screws or the two rivets can then be arranged radially spaced apart from each other in the respective rotor stack segment. In this embodiment, a particularly stable attachment of the rotor body to the support rings can be achieved.

The support ring can comprise a radially inner inner ring and a radially outer outer ring. In addition, the support ring can comprise several - but at least two - radially aligned ribs that connect the inner ring and the outer ring. Each rib of the support ring can be assigned to one of the rotor stack segments and can rest i.e. lie on the respective rotor stack segment. If the rotor body is fastened to the support rings via screws or rivets, the screws or the rivets can pass through the outer ring and/or through the ribs.

In one possible embodiment of the rotor, the rotor can comprise at least one annular i.e. ring-shaped impeller with several blades. The impeller can be aligned coaxially to the shaft. Furthermore, the impeller can be arranged axially adjacent to the cavity and/or at least partially in the cavity. Thus, while rotating the rotor, the wheel can convey air into or out of the cavity. This allows the shaft and the rotor body to be cooled effectively and actively by air. The impeller can, for example, be fastened, preferably bolted, to one of the support rings.

In the present invention, the terms "axial" and "coaxial" and "radial" and "circumferential" always refer to the longitudinal central axis of the shaft. Thus, the circumferential direction encircles the longitudinal central axis of the shaft. During rotation of the rotor, the longitudinal center axis of the shaft corresponds to an axis of rotation of the shaft.

Further important features and advantages of the invention are apparent from the sub-claims, from the drawings and from the associated description of the figures with reference to the drawings.

It is understood that the features mentioned above and those to be explained below can be used not only in the combination indicated in each case, but also in other combinations or on their own, without departing from the scope of the present invention.

Preferred embodiments of the invention are shown in the drawings and are explained in more detail in the following description, with identical reference signs referring to identical or similar or functionally identical components.

It shows, in each case schematically
- Figs. 1 and 2: an exploded sectional view and a view of a rotor according to the invention;
- Figs. 3 and 4: a sectional view and a view of the rotor according to the invention without a shaft;
- Fig. 5: a sectional view of the rotor according to the invention;
- Fig. 6: a top view of a support ring of the rotor according to the invention.

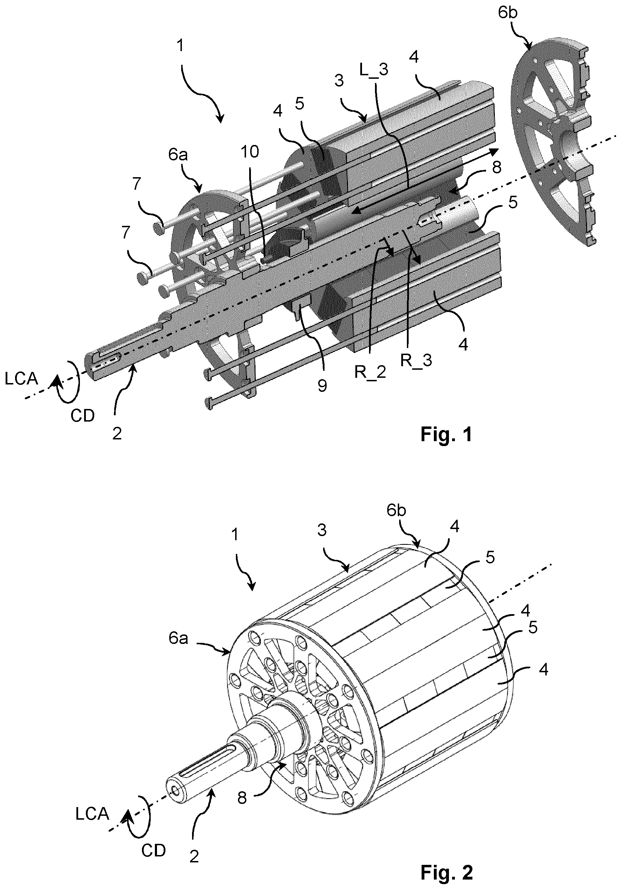

Fig. 1 shows an exploded sectional view of a rotor 1 according to the invention. Fig. 2 shows a view of the rotor 1 according to the invention. The rotor 1 comprises a shaft 2 with a longitudinal central axis LCA and an annular rotor body 3. The rotor body 3 and the shaft 2 are aligned coaxially to one another, wherein the shaft 2 is arranged in the rotor body 3. In Fig. 1, the sectional plane is aligned parallel to the longitudinal central axis LCA of the shaft 2.

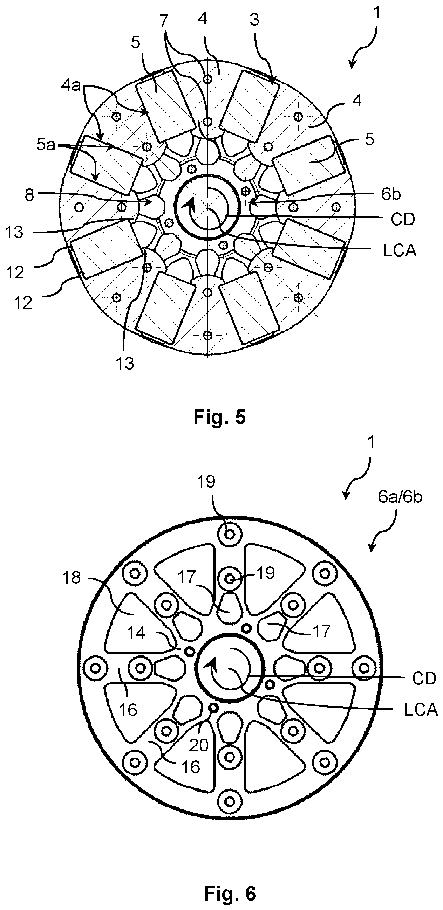

The rotor body 3 comprises several - here eight - rotor stack segments 4 and several - here eight - magnets 5. The rotor stack segments 4 and the magnets 5 are distributed around the shaft 2 and alternate with one another in a circumferential direction CD. The rotor stack segments 4 and the magnets 5 are each formed as separate i.e. individual elements and lie on each other with their side surfaces arranged transversely to the circumferential direction CD. The structure of the rotor body 3 will be explained in more detail with reference to Fig. 5.

Furthermore, the rotor 1 comprises two support rings 6a and 6b, which are aligned coaxially to the shaft 2 and are fastened to the shaft 2, for example, via press fit. The rotor body 3 is arranged axially between the two support rings 6a and 6b and lies on the support rings 6a and 6b. The structure of the support rings 6a and 6b will be explained in more detail with reference to Fig. 6.

The rotor body 3 is fastened to the support rings 6a and 6b via several - here sixteen - rivets 7. In the embodiment shown here, two rivets 7 are arranged in each rotor stack segment 4. The rivets 7 pass axially through the support rings 6a and 6b and the associated rotor pack segment 4. As a result, the respective rivet 7 connects the two support rings 6a and 6b to each other and the rotor body 3 to the support rings 6a and 6b. The rivets 7 therefore act as a tie rod here. The rivets 7 are arranged at a radial distance to each other in the respective rotor stack segment 4.

An inner diameter R_3 of the rotor body 3 is larger than an outer diameter R_2 of the shaft 2. As a result, a cavity 8 is formed between the shaft 2 and the rotor body 3. The cavity 8 is annular i.e. ring-shaped and encircles the shaft 2. The cavity 8 extends over the entire axial length L_3 of the rotor body 3 and is filled with air. Thus, the weight of the rotor 1 can be reduced and the shaft 2 and the rotor body 3 can be air-cooled within the cavity 8.

Furthermore, the rotor 1 comprises an impeller 9. The impeller 9 is aligned coaxially to the shaft 2 and is arranged on the shaft 2 axially adjacent to the cavity 8. The impeller 9 can convey air into and/or out of the cavity 8 when the rotor 1 rotates, so that the shaft 2 and the rotor body 3 can be actively cooled by air. The impeller 9 is screwed to the support ring 6a by means of several screws 10.

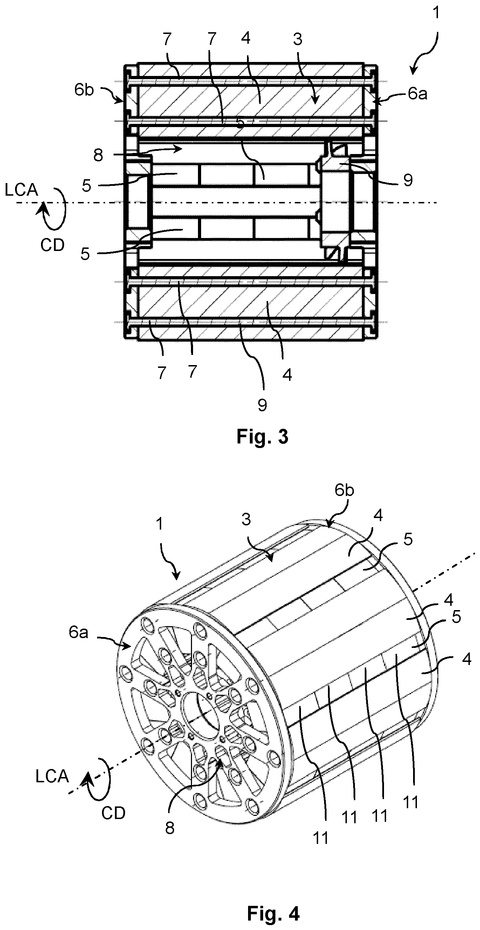

Fig. 3 shows a sectional view and Fig. 4 shows a view of the rotor 1 according to the invention without a shaft 2. In Fig. 3, the sectional plane is aligned parallel to the longitudinal central axis LCA of the shaft 2. As can be seen in Fig. 3, the rivets 7 in the associated rotor pack segment 4 are radially spaced apart from each other and pass through the support rings 6a and 6b as well as through the associated rotor pack segment 4. As can be seen in Fig. 4, the respective magnets 5 comprises several - here four - individual magnets 11 material-bonded together.

Fig. 5 shows a sectional view of the rotor body 3 of the rotor 1 according to the invention. In Fig. 5, the sectional plane is aligned transversely to the longitudinal central axis LCA of the shaft 2. As already described above, the rotor body 3 comprises several rotor stack segments 4 and several magnets 5. The rotor stack segments 4 and the magnets 5 alternate in the circumferential direction CD. For this purpose, the number of rotor stack segments 4 and the number of magnets 5 are identical. The rotor stack segments 4 can be made of an electrically conductive material and can comprise several sheets material-bonded together. The magnets 5 can be made of ferrite or neodymium material and, with reference to Fig. 4, can comprise four individual magnets 11 material-bonded together.

The rotor stack segments 4 comprise two opposite side surfaces 4a that are aligned transversely to the circumferential direction CD and the magnets 5 comprise two opposite side surfaces 5a that are aligned transversely to the circumferential direction CD. In the circumferential direction CD, the side surfaces 4a of the adjacent rotor stack segments 4 and the side surfaces 5a of the adjacent magnets 5 lie on each other. To stabilize the rotor body 3, the rotor stack segments 4 and the magnets 5 can be glued together at the adjacent side surfaces 4a and 5a.

To attach the magnets 5 to the rotor stack segments 4, a first projection 12 and a second projection 13 are formed on each side surface 4a of each rotor stack segment 4. The first projection 12 is formed near to a radial outer edge of the side surface 4a and the second projection 13 is formed near to a radial inner edge of the side surface 4a. The first projection 12 and the second projection 13 extend axially and project from the respective side surface 4a in the circumferential direction CD. The adjacent magnet 5 lies radially between the two projections 12 and 13 and is thus radially fixed.

Fig. 6 shows a top view of the support ring 6a or 6b of the rotor 1 according to the invention. The support ring 6a or 6b comprises a radially inner inner ring 14 and a radially outer outer ring 15. Furthermore, the support ring 6a or 6b comprises several - here eight - ribs 16. The number of ribs 16 corresponds to the number of the rotor stack segments 4 of the rotor body 3. In the support ring 6a or 6b, several - here eight - open spaces 18 are formed between the ribs 16, so that weight of the support ring 6a or 6b is reduced.

In the rotor 1, the inner ring 14 is fastened to the shaft 2, for example via press fit, and the respective rib 16 lies on the associated rotor pack segment 4. The rivets 7 pass through openings 19 in the outer ring 15 and in the ribs 16. Furthermore, openings 20 are formed in the support ring 6a or 6b for fastening the impeller 9 via the screws 10.

Furthermore, recesses 17 are also formed in the support ring 6a or 6b on the inner ring 14 and partially on the ribs 16. The recesses 17 correspond axially with the cavity 8 in an air-conducting manner to allow air flow into and out of the cavity 8.

## Claims

1. Rotor (1) for an electric machine, especially a spoke-type internal-permanent-magnet motor,
- wherein the rotor (1) comprises a shaft (2) with a longitudinal central axis (LCA) and an annular rotor body (3),
- wherein the shaft (2) is arranged coaxially in respect to the longitudinal center axis (LCA) in the rotor body (3),
- wherein the rotor body (3) comprises several rotor stack segments (4) and several magnets (5), and
- wherein the rotor stack segments (4) and the magnets (5) are arranged around the shaft (2) and alternate in a circumferential direction (CD),
**characterized**
**in that** the rotor body (3) is arranged at a radial distance to the shaft (2), so that an annular cavity (8) is formed between the shaft (2) and the rotor body (3) and encircles the shaft (2) in the circumferential direction (CD).

2. Rotor (1) according to claim 1,
**characterized**
**in that** the cavity (8) extends over an entire axial length (L_3) of the rotor body (3).

3. Rotor (1) according to claim 1 or 2,
**characterized**
**in that** the rotor stack segments (4) and the magnets (5) are formed as separate elements and are connected to each other in a material-bonded manner.

4. Rotor (1) according to one of the preceding claims,
**characterized**
- **in that** each of the rotor stack segments (4) comprises, on a side face (4a) aligned transversely to the circumferential direction (CD) and facing the adjacent magnet (5), a radially outer first projection (12) projecting in the circumferential direction (CD), and the adjacent magnet (5) lies on the first projection (12) in a radially outward direction, and/or
- **in that** each of the rotor stack segments (4) comprises, on a side face (4a) aligned transversely to the circumferential direction (CD) and facing the adjacent magnet (5), a radially inner second projection (13) projecting in the circumferential direction (CD), and the adjacent magnet (5) lies on the second projection (13) in a radially inward direction.

5. Rotor (1) according to one of the preceding claims,
**characterized**
- **in that** the rotor (1) comprises two annular support rings (6a, 6b), wherein the support rings (6a, 6b) are aligned coaxially to the shaft (2) and are fastened to the shaft (2), and
- **in that** the rotor body (3) is arranged axially between the support rings (6a, 6b) and is fastened to the support rings (6a, 6b).

6. Rotor (1) according to claim 5,
**characterized**
**in that** the support ring (6a, 6b) comprises at least one recess (17) which corresponds axially with the cavity (8) in an air-conducting manner.

7. Rotor (1) according to claim 5 or 6,
**characterized**
- **in that** the rotor body (3) is fastened to the support rings (6a, 6b) via several screws or rivets (7), and
- **in that** the screws or rivets (7) penetrate the rotor pack segments (4) and fasten the support rings (6a, 6b) to each other and the rotor body (3) to the support rings (6a, 6b).

8. Rotor (1) according to one of claims 5 to 7,
**characterized**
- **in that** the support ring (6a, 6b) comprises a radially inner inner ring (14) and a radially outer outer ring (15),
- **in that** the support ring (6a, 6b) comprises several radially aligned ribs (16) connecting the inner ring (14) and the outer ring (15), and
- **in that** each rib (16) of the support ring (6a, 6b) is assigned to one of the rotor stack segments (4) and lies on the respective rotor stack segment (4).

9. Rotor (1) according to one of the preceding claims,
**characterized**
- **in that** the rotor (1) comprises at least one annular impeller (9) with several blades and the impeller (9) is aligned coaxially to the shaft (2), and
- **in that** the impeller (9) is arranged axially adjacent to the cavity (8) and/or at least partially in the cavity (8), so that while rotating the rotor (1), the impeller (9) can convey air into or out of the cavity (8).

10. Rotor (1) according to at least claims 5 and 9,
**characterized**
**in that** the impeller (9) is fastened to one of the support rings (6a, 6b), preferably bolted to the support ring (6a, 6b).
